# EUROPÄISCHE PATENTSCHRIFT

(11) **EP 0 585 641 B1**
(45) Veröffentlichungstag und Bekanntmachung des Hinweises auf die Patenterteilung: **05.11.1997**
(21) Anmeldenummer: 93112514.0
(22) Anmeldetag: 04.08.1993
(51) Int. Cl.: G01N 23/207, G21K 1/02

(54) **Röntgendiffraktometer**
X-ray diffractometer
Diffractomètre à rayons X

(30) Priorität: 12.08.1992 DE 4226707
(43) Veröffentlichungstag der Anmeldung: 09.03.1994
(73) Patentinhaber: SIEMENS AKTIENGESELLSCHAFT, 80333 München (DE)
(72) Erfinder: Göbel, Herbert, Dr., D-81735 München (DE)

(56) Entgegenhaltungen:
- EP-A- 0 456 897
- FR-A- 1 589 405
- GB-A- 1 126 767
- GB-A- 2 083 969
- US-A- 2 805 342
- PATENT ABSTRACTS OF JAPAN vol. 017, no. 399 (P-1579)26. Juli 1993 & JP-A-05 072 150 (HITACHI LTD)

## Beschreibung

Röntgenspektrometer dienen der zerstörungsfreien Analyse von festen, pulverförmigen und flüssigen Proben. Innerhalb dieser Geräteklasse haben die Pulver-Röntgendiffraktometer eine besondere Bedeutung erlangt, da sie einen relativ einfachen Aufbau besitzen und vielseitig anwendbar sind. So lassen sich aus den mit solchen Diffraktometern gewonnenen Beugungsdiagrammen unbekannte Substanzen und Substanzgemische identifizieren, deren Gitterstruktur bestimmen sowie Aussagen über den Kristallisationszustand machen (s. beispielsweise Siemens Forschungs- und Entwicklungsberichte, Bd. 14 (1985) Nr. 4, Seiten 167 bis 176).

Pulverdiffraktometer verwenden vorwiegend fokussierende Strahlanordnungen, die eine hohe Ausnutzung des die Probe beleuchtenden Röntgenstrahlbündels gewährleisten. Um ein günstiges Verhältnis von Beugungsmaxima und Untergrund zu erzielen, werden vielfach primärseitige oder sekundärseitige Monochromatorkristalle eingesetzt. Die zumeist aus gebogenen Graphit-Mosaikkristallen bestehenden Sekundärmonochromatoren haben den Vorteil, daß sie die nutzbare Beugungsstrahlung von der in der Probe ungewollt erzeugten Fluoreszenzstrahlung zu trennen vermögen.

In den achtziger Jahren wurde die Meßtechnik der Röntgenographie durch den Einsatz ortsauflösender Detektoren entscheidend bereichert. Diese Detektoren wirken wie eine Vielzahl von Einzelzählern und erlauben so eine wesentlich schnellere Datensammlung. Infolge der damit einhergehenden Erhöhungen der Meßgeschwindigkeit um mehr als einen Faktor 100, ließen sich Momentaufnahmen von zeitlich veränderlichen Zuständen (Festkörperreaktionen, Phasenumwandlung) in der Probe machen.

In Kombination mit primärseitigen Monochromatoren haben sich ortsauflösende Detektoren besonders bewährt. Hierbei werden streng fokussierende Primärmonochormatoren aus hochperfekten Einkristallen (Germanium, Silizium, Quarz) bevorzugt, da diese die für die Auswertung der Beugungsdiagramme problematischen Kα₁ - Kα₂-Dubletts aufzulösen vermögen. Man erhält daher nur Diagramme mit Kα₁-Reflexen, wobei der durch den Monochromator bedingte Intensitätsverlust des primären Röntgenstrahls durch den Einsatz des ortsauflösenden Detektors mehr als ausgeglichen wird.

Verglichen mit den konventionellen Verfahren der Röntgenanalyse besitzt die sogenannte Totalreflexions-Röntgenfluoreszenzanalyse TRFA eine hohe Oberflächenempfindlichkeit, da die anregende Strahlung unter einem sehr kleinen Winkel α < 0,5° auf die zu untersuchende Probe einfällt und somit nur wenige Nanometer in diese eindringt. Das Verfahren der TRFA eignet sich daher insbesondere zur Bestimmung der chemischen Zusammensetzung von dünnen Schichten und Oberflächen. Eine TRFA-Meßvorrichtung ist aus der EP 0 456 897 A1 bekannt. Anstelle eines primärseitigen Monochromators besitzt diese Meßvorrichtung einen sogenannten Vielschichtspiegel, der die in einer Röntgenröhre erzeugte Strahlung ohne größeren Intensitätsverlust in Richtung der zu untersuchenden Probe umlenkt.

Die in der GB 2 083 969 beschriebene Vorrichtung zur Abbildung der im Innern eines großvolumigen Gußkörpers vorhandenen Strukturen (Luftblasen, Einschlüsse) besteht im wesentlichen aus einer einen feinen Röntgenstrahl emittierenden Quelle, einer Kollimator-Detektoreinheit sowie eine Auswerteelektronik, welche den im optoelektronischen Bildwandler des Detektors gemessenen Strahlungsintensitäten Helligkeitswerte zuordnet und einen Monitor entsprechend ansteuert. Die Lamellen des dem Detektor vorgelagerten Kollimators sind hierbei auf einen sehr kleinen Bereich des vom primären Röntgenstrahl durchleuchteten Volumens ausgerichtet. Dieser annähernd punktförmige Bereich wirkt als virtuelle Streustrahlungsquelle, die nur in den durch den Kollimator vorgegebenen Raumwinkel emittiert. Da alle zwischen dieser virtuellen Streustrahlungsquelle und dem Detektor liegenden Strukturen üblicherweise ein anderes Absorptionsverhalten zeigen als das umgebende Material, treten sie als helle oder dunkle Flächen auf dem Bildschirm des Monitors in Erscheinung.

Den Detektoren der aus GB-A-1 126 767, US-A-2 865 342 und JP-A-0507215 6 bekannten Röntgenstrahlgeräte sind jeweils Kollimatoren vorgelagert. Jeder der Kollimatoren besitzt eine Vielzahl von Transmissionsöffnungen oder Transmissionskanälen, deren Längsachsen sich im Bereich der Röntgenquelle oder am Ort eines virtuellen Bildes der Röntgenquelle schneiden.

Der Erfindung liegt die Aufgabe zugrunde, ein Röntgendiffraktometer derart auszugestalten, daß eine untergrundarme Messung von Röntgenbeugungsdiagrammen möglich ist. Es soll insbesondere gewährleistet sein, daß nur die von der zu untersuchenden Probe gestreute Röntgenstrahlung zum Detektor gelangt. Eine Reduzierung des Untergrundes in den Beugungsdiagrammen wird insbesondere bei der Untersuchung von in Glaskapillaren eingeschlossenen Proben angestrebt. Diese Aufgaben werden erfindungsgemäß durch ein Röntgendiffraktometer mit den in Anspruch 1 angegebenen Merkmalen gelöst.

Der mit der Erfindung erzielbare Vorteil besteht insbesondere darin, daß sich die Nachweisempfindlichkeit aufgrund der effizienten Abschirmung der Untergrundstrahlung deutlich verbessert. Es ist daher ohne weiteres möglich, in unmittelbarer Nachbarschaft der Probe weitere Experimentiereinrichtungen, insbesondere einen Heizofen, anzuordnen, ohne die Meßgenauigkeit zu beeinträchtigen.

Die abhängigen Ansprüche betreffen vorteilhafte Weiterbildungen der im folgenden anhand der Zeichnungen näher erläuterten Erfindung. Hierbei zeigt:
- Fig. 1: ein Ausführungsbeispiel eines erfindungsgemäßen Röntgendiffraktometers.
- Fig. 2: den schematischen Aufbau des verwendeten Reflektors.
- Fig. 3: ein mit dem Röntgendiffraktometer aufgenommenes Beugungsdiagramm.

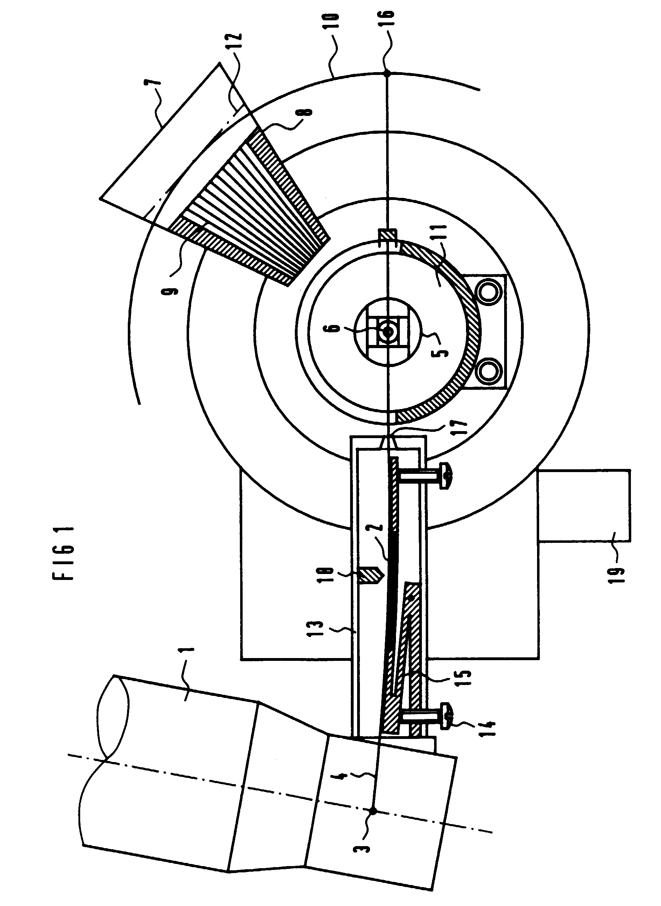

Wie in Fig. 1 schematisch dargestellt, besteht das erfindungsgemäße Röntgendiffraktometer aus einer Röntgenrohre 1, einem gekrümmten Reflektor 2 zur Umlenkung der in einem linienförmigen Elektronenfokus 3 auf der Röhrenanode erzeugten Röntgenstrahlung 4 in Richtung der auf einem konventionellen Goniometerkopf 5 montierten Probe 6, einem ortsauflösenden Detektor 7 und einem dem Detektor 7 vorgelagerten Kollimator 8. Da die Lamellen 9 des Kollimators 8 radial auf die im Zentrum des Meßkreises 10 angeordnete Probe 6 ausgerichtet sind, trägt nur die an der Probe 6 gestreute Röntgenstrahlung zum Meßsignal bei. Andere Streustrahlung wird durch den Kollimator 8 weitgehend abgeschirmt. Es ist daher erstmals möglich, beispielsweise einen zylinderförmigen Heizofen 11 in unmittelbarer Nachbarschaft der in einer Glaskapillare (Mark-Röhrchen) eingeschlossenen Probe 6 anzuordnen, ohne daß sich die von den Ofenwandungen und Halterungen usw. ausgehende Streustrahlung in den bei verschiedenen Temperaturen gemessenen Beugungsdiagrammen als erhöhter Untergrund störend bemerkbar macht.

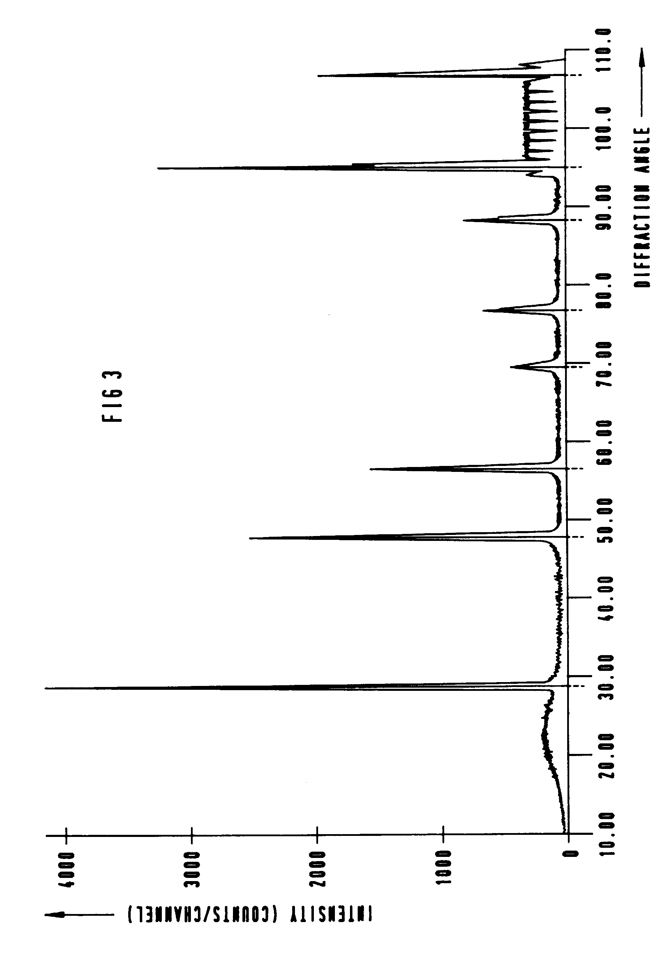

Als ortsauflösender Detektor 7 kommt insbesondere ein linearer Proportionalzähler in Betracht. Dieser ist derart angeordnet, daß sein Zähldraht 12 den Meßkreis 10 tangential berührt. Aufgrund seiner begrenzten Ausdehnung kann der Detektor 7 die an der Probe 6 gestreute Röntgenstrahlung nur innerhalb eines Winkelbereichs von beispielsweise 10° bis 20° gleichzeitig erfassen. Um das gesamte Beugungsdiagramm aufzuzeichnen ist es daher notwendig, die Detektor-Kollimatoreinheit 7/8 mit Hilfe eines Schrittmotors 19 entlang des Meßkreises 10 zu verschieben. Die Datenerfassung erfolgt hierbei vorteilhafterweise durch Anwendung des aus der DE 26 37 945 bekannten Meßverfahrens. Hierdurch ist auch sichergestellt, daß im Beugungsdiagramm keine durch den Kollimator 8 bedingten Abschattungseffekte auftreten (s. auch Fig. 3).

Wie eingangs erwähnt, besitzen primärseitige Kristallmonochromatoren eine geringe integrale Reflektivität. Erhebliche Intensitätsverluste treten auch auf bei der Verwendung eines aus einer Kombination von Reflexions- und Transmissionsspiegeln bestehenden breitbandigen Monochromators, da der Transmissionsspiegel stark absorbiert. Hinzu kommmt eine aufwendige Mechanik, um die einzelnen Komponenten zueinander sowie zur Röntgenquelle und zur Probe hin auszurichten. Um eine bessere Ausnutzung der Intensität des primären Röntgenstrahlbündels 4 zu gewährleisten, verwendet das erfindungsgemäße Röntgendiffraktometer einen in einem Gehäuse 13 angeordneten Vielschichtspiegel 2 als Reflektor. Dieser ein hohes Reflexionsvermögen (Reflektivität größer 80%) aufweisende Vielschichtspiegel wird mit Hilfe einer aus einer Stellschraube 14 und einem Hebelelement 15 bestehenden Biegeeinrichtung elliptisch oder kreisförmig derart deformiert, daß er die in Richtung der Probe 6 umgelenkte Röntgenstrahlung 4 in einen auf dem Meßkreis 10 liegenden Punkt 16 fokussiert. Die am bzw. im Gehäuse 13 vorhandenen Blenden 17/18 dienen der Begrenzung des Strahlenquerschnitts in horizontaler und vertikaler Richtung.

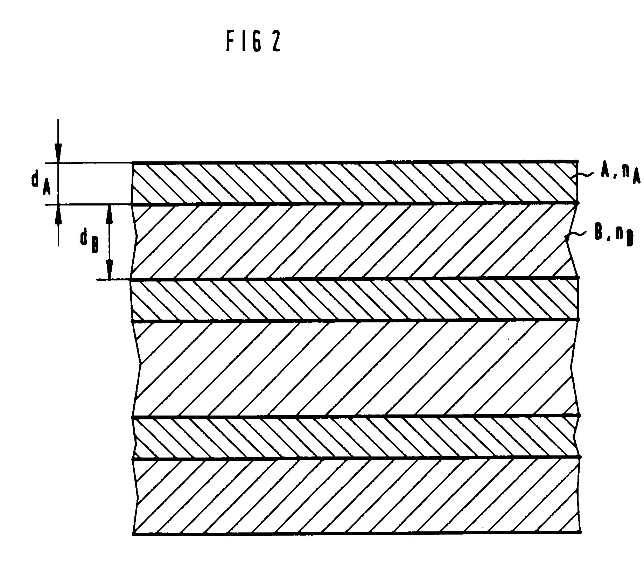

Der in Fig. 2 schematisch dargestellte Vielschichtspiegel besteht aus einer sich periodisch wiederholenden Folge von Schichten aus Materialien A und B mit unterschiedlichen Brechungsindizes n_{A} bzw. n_{B}, wobei die Anzahl N der Schichten innerhalb einer Periode der Bedingung N≧ 2 genügt. Diese Schichtenfolge folge erzeugt man vorzugsweise durch aufsputtern, aufdampfen oder aufwachsen der entsprechenden Materialien A bzw. B auf einem Siliziumsubstrat. Die Schichten selbst können hierbei amorph oder kristallin sein. Für einen aus einer periodischen Folge von zwei Schichten bestehenden Spiegel kommt beispielsweise eine Kombination der Materialien A/B: Mo/B₄C, Re/Si, Re/C, W/Si, W/C, Ta/Si, W/Be, Mo/Be, Mo/Si, Mo/C, Ni/C, Au/C, AuPd/C, ReW/B, ReW/C, Al/Be oder V/C in Betracht. Da die Periodizitätslänge d=d_{A} + d_{B}(d_{A}, d_{B}: Dicke der Schichten A bzw. B) sowie das Schichtdickenverhältnis d_{A}:d_{B} von Lagen mit hohem und niedrigem Brechungsindex n_{A} bzw. n_{B} frei vorgebbar sind, kann man die Eigenschaften des Reflektors 2 den jeweiligen experimentiellen Gegebenheiten sehr gut anpassen.

Das in Fig. 3 dargestellte Beugungsdiagramm wurde mit dem erfindungsgemäßen Röntgendiffraktometer unter Anwendung des aus der DE 26 37 945 bekannten Meßverfahrens aufgenommen. Als Probe diente ein in einer 0,5 mm dicken Quarzkapillare eingeschlossenes Siliziumpulver, das mit Cu-K-Alpha-Strahlung beaufschlagt wurde (Röhrenparameter: 35 kV/28 mA). Aufgetragen ist die im ortsauflösenden Proportionalzähler 7 gemessene Intensität (Zählrate pro Kanal) in Abhängigkeit vom Streuwinkel. Da der Detektor 7 sich während der Messung mit einer Geschwindigkeit von 30°/Minute auf dem Meßkreis bewegte, benötigte man nur etwa 3 Minuten zur Aufzeichnung des Beugungsdiagramms im Winkelbereich zwischen 0° und 95°. Der Winkelbereich zwischen 95° und 110° wurde mit stationärem Detektor aufgenommen. Man erkennt deutlich den durch den Kollimator 8 verursachten Abschattungseffekt, der im übrigen Beugungsdiagramm nicht in Erscheinung tritt.

Die Erfindung ist selbstverständlich nicht auf das beschriebene Ausführungsbeispiel beschränkt. So ist es ohne weiteres möglich, den Vielschichtspiegel durch einen Totalreflexionsspiegel zu ersetzen und diesen entsprechend zu deformieren. Wie beim Vielschichtspiegel kann die Deformation elliptisch, kreisförmig oder parabolisch (Brennpunkt im Unendlichen, paralleler Primärstrahl) sein. Als ortsauflösender Detektor kommen selbstverständlich auch ein sog. "Curved PSPC" (Curved Position Sensitive Proportional Counter) und andere Weitwinkeldetektoren in Betracht. Auch müssen die Proben nicht notwendigerweise in Pulverform vorliegen. Stäbchenförmige Präparate, ebene Proben und Einkristalle eignen sich ebenso zur Untersuchung in dem erfindungsgemäßen Röntgendiffraktometer.

## Patentansprüche

1. Röntgendiffraktometer mit
a) einer Röntgenstrahlung (4) emittierenden Quelle (1, 3),
b) einem gekrümmten Reflektor (2), welcher die Röntgenstrahlung (4) bündelt und in Richtung einer im Zentrum eines Meßkreises (10) angeordneten Probe (6) umlenkt,
c) einem entlang des Meßkreises (10) verschiebbaren ortsauflösenden Detektor (7) zur Messung der Intensität der in der Probe (4) gestreuten Röntgenstrahlung in Abhängigkeit vom Streuwinkel und
d) einem dem Detektor (7) vorgelagerten Kollimator (8), dessen Lamellen (9) radial auf die im Zentrum des Meßkreises (10) angeordnete Probe (4) ausgerichtet sind.

2. Röntgendiffraktometer nach Anspruch 1,
**gekennzeichnet durch** einen kreisförmig, elliptisch oder parabolisch deformierten Reflektor (2).

3. Röntgendiffraktometer nach Anspruch 1 oder 2,
**gekennzeichnet durch** einen Totalreflexionsspiegel als Reflektor (2).

4. Röntgendiffraktometer nach Anspruch 1 oder 2,
**gekennzeichnet durch** einen Vielschichtspiegel als Reflektor (2).

5. Röntgendiffraktometer nach einem der Ansprüche 1 bis 4,
**dadurch gekennzeichnet**,
daß der Fokus (16) der Röntgenstrahlung (4) auf dem Meßkreis (10) liegt.

6. Röntgendiffraktometer nach einem der Ansprüche 1 bis 5,
**gekennzeichnet durch** eine in einer Kapillare eingeschlossene pulverförmige Probe (6).

7. Röntgendiffraktometer nach einem der Ansprüche 1 bis 6,
**gekennzeichnet durch** einen linearen oder gekrümmten Proportionalzähler als ortsauflösenden Detektor (7).

## Claims

1. X-ray diffractometer, having
a) a source (1, 3) that emits X-radiation (4),
b) a curved reflector (2), which focuses the X-radiation (4) and deviates it in the direction of a sample (6) that is arranged at the centre of a measuring circle (10),
c) a spatially resolving detector (7) that can be moved along the measuring circle (10), for measuring the intensity of the X-radiation scattered in the sample (4) as a function of the scattering angle, and
d) a collimator (8), that is mounted in front of the detector (7), and whose sheets (9) are directed radially at the sample (4) arranged at the centre of the measuring circle (10).

2. X-ray diffractometer according to Claim 1, characterized by a circularly, elliptically or parabolically deformed reflector (2).

3. X-ray diffractometer according to Claim 1 or 2, characterized by a total-reflection mirror as reflector (2).

4. X-ray diffractometer according to Claim 1 or 2, characterized by a multi-layer mirror as reflector (2).

5. X-ray diffractometer according to one of Claims 1 to 4, characterized in that the focal point (16) of the X-radiation (4) lies on the measuring circle (10).

6. X-ray diffractometer according to one of Claims 1 to 5, characterized by a sample (6) in powder form, enclosed in a capillary.

7. X-ray diffractometer according to one of Claims 1 to 6, characterized by a linear or curved proportional counter as spatially resolving detector (7).

## Revendications

1. Diffractomètre à rayons X comportant
a) une source (1, 3) émettant un rayonnement X (4),
b) un réflecteur courbe (2), qui focalise le rayonnement X (4) et le détourne en direction d'un échantillon (6) disposé au centre d'un cercle de mesure (10),
c) un détecteur (7) à résolution de position pouvant être déplacé le long du cercle de mesure (10) destiné à mesurer l'intensité du rayonnement X diffusé dans l'échantillon (4) en fonction de l'angle de diffusion et
d) un collimateur (8), logé devant le détecteur (7), dont les lames (9) sont orientées radialement sur l'échantillon (4) disposé au centre du cercle de mesure (10).

2. Diffractomètre à rayons X selon la revendication 1, caractérisé par un réflecteur (2) déformé de façon circulaire, elliptique ou parabolique.

3. Diffractomètre à rayons X selon les revendications 1 ou 2, caractérisé par un miroir à réflexion totale en guise de réflecteur (2).

4. Diffractomètre à rayons X selon les revendications 1 ou 2, caractérisé par un miroir à couches multiples en guise de réflecteur (2).

5. Diffractomètre à rayons X selon l'une des revendications 1 à 4, caractérisé en ce que le foyer (16) du rayonnement X (4) se trouve sur le cercle de mesure (10).

6. Diffractomètre à rayons X selon l'une des revendications 1 à 5, caractérisé par un échantillon pulvérulent (6) contenu dans un tube capillaire.

7. Diffractomètre à rayons X selon l'une des revendications 1 à 6, caractérisé par un compteur proportionnel linéaire ou courbe en guise de détecteur à résolution de position (7).
